# EUROPEAN PATENT SPECIFICATION

(11) **EP 1 946 006 B1**
(45) Date of publication and mention of the grant of the patent: **19.08.2009**
(21) Application number: 06791486.1
(22) Date of filing: 27.09.2006
(51) Int. Cl.: F23L 7/00, F23G 7/10, F23G 5/30, F23G 5/46, F23G 5/50, F23J 15/02, F23L 15/00

(54) **METHOD AND SYSTEM FOR HEATING OF WATER BASED ON HOT GASES**
VERFAHREN UND SYSTEM ZUR ERWÄRMUNG VON WASSER AUF GRUNDLAGE HEISSER GASE
PROCEDE ET SYSTEME PERMETTANT LE CHAUFFAGE D'EAU AU MOYEN DE GAZ CHAUDS

(30) Priority: 27.09.2005 DK 200501345
(43) Date of publication of application: 23.07.2008
(73) Proprietor: Dall Energy Holding ApS, 3460 Birkerød (DK)
(72) Inventor: BENTZEN, Jens Dall, DK-3460 Birkerød (DK)
(74) Representative: Plougmann & Vingtoft A/S
(86) International application number: PCT/DK2006/050049
(87) International publication number: WO 2007/036236

(56) References cited:
- EP-A2- 0 541 194
- GB-A- 2 056 875
- US-A- 4 056 068
- US-A- 5 052 310
- US-B1- 6 228 143

## Description

The invention concerns a method and a system for heat recovery from hot gas, e.g. flue gas, produced in a thermal reactor, or - more precisely - for heating of water by means of the hot gases that are released by thermal conversion (gasification or combustion) of solid fuels e.g. biomass, waste or coal.

Heating of water from hot gases that are released during thermal conversion of fuels is well known. The hot water can be used for heating purposes, e.g. in houses, apartment houses, offices, in industries etc. and for domestic water. Installations for such purposes are produced in very different sizes, approx.1 kW-250 MW input effect.

Reference is made to "Varme ståbi", Nyt teknisk Forlag, 4th ed., 2004, ordering No. 44031-1, ISBN 87-571-2546-5, Ullmann's Encyclopedia of Industrial Chemistry Release 2005, 7th Edition, "User friendly it tool for biomass heating plants" in proceedings of *"2nd world conference and technological exhibition on biomass for energy, industry and climate protection"* and DE 3544502 A1.

The water is usually heated in a closed circuit and led to a point of consumption, after which the water is returned to the heat production unit after release of the thermal energy. When the water leaves the production unit (supply), the water temperature usually is 60-90°C. The temperature of the water returning to the heat-production unit after cooling at the consumer (return) is about 30-50°C.

Concurrently with the technological development and the attention to energy savings, there has been a tendency to reduce the supply and return temperatures, as the heat loss from the distribution pipes is reduced in that way.

The hot water can be produced close to the required locations or be sent to the consumer via a district heating network.

The energy released by thermal conversion of a fuel can be transferred to hot water in stages, e.g.:
*1. By cooling of the area around the place where the thermal conversion takes place, e.g. a water-cooled feeder, a water-cooled grate, water-cooled areas in the reactor or other cooled surfaces where the thermal conversion takes place.*
*2. Cooling of the (dry) hot gases*
*3. Further cooling of the gases, by which vapours in the gas is condensed.*

### Re 2. Cooling of the (dry) hot gases

The gas leaving the thermal unit is usually around 700-1000°C., depending on technology, fuel and operation conditions (see for example US-4 056 068-A). It is well known, e.g. at CHP stations, that the temperature in the thermal unit can be adjusted or controlled by water injection in order to protect materials, e.g. the superheater, against a too high temperature. The amount of water injected in order to adjust the temperature in the boiler room is, however, very limited; the temperature of the gas remains high (above 600°C), and the characteristics of the gas, e.g. the water dew point, are not changed substantially.

Usually, the energy from the hot gas is transferred to another medium, e.g. water, by using a heat exchanger where the hot gas is flowing at one side while another colder medium (e.g. water) is flowing at the other side. Thus, the water is heated whereas the gas is cooled. In some plants, more heat exchangers are used, e.g. air preheating and/or steam superheating and/or hot water production.

These heat exchangers are usually of the convection heat exchanger type, as the energy mainly is transferred from the gas via convection. Usually, steel pipes are used. When solid fuels are converted, the gas contains particles. These particles result in several problems in this heat exchanger: fouling, corrosion, low heat exchange rates etc. and often a device is mounted to keep the gas tubes clean, e.g. soot blowing or mechanical cleaning.

The heat exchanger used for transferring energy from the dry hot gas is made of materials matching the qualities of the gas, usually heat-proof steel.

Usually, the gas is cooled in the "convection part" to around 150°C, as the temperature of the gas then is above the acid dew point and the water dew point. If the gas is cooled to or below the acid or water dew points, severe corrosion may occur in the heat-proof material of the heat exchanger.

Ammonia, chlorine, sulphur, particles, salts etc. is often removed from the gas, for instance by a dry or semi-dry cleaning process. In this way, the materials causing problems for the environment or the materials blocking and/or corroding during the subsequent process stages can be removed.

### Re 3. Further cooling of the gases by which vapour in the gas is condensed

In order to utilize more of the heat energy, the gas can be further cooled, by which vapours, including water vapour in the gas, are condensing. The composition of the gas depends on the fuel conversed and of the conditions in the thermal reactor. With high moisture content in the fuel and a low amount of excess air in the thermal unit, a high water dew point is obtained. Usually, the water dew point in the gas will be approx. 35-60°C, if the gas has atmospheric pressure. If the gas is cooled below the water dew point, water vapour will condense, and condensation energy is released which can be used for further heat production. Depending on the fuel and the conditions in the thermal process, the energy utilization can be increased by up to about 30%.

By condensing of water vapour, other materials are released from the gas too, e.g. ammonia, chlorine, sulphur, particles, salts etc. As some of these substances may spoil, e.g. corrode the materials used for cooling the dry gas (the convection part), the condensing part is usually made of other materials. In the condensing part, e.g. glass fibre, plastic material, glass, acid-proof stainless steel, titanium etc. are used.

As the gas which is led to the condensing unit is cooled to e.g. 150°C and has a water dew point of around 35-60°C, the temperature of the water heated in the condensing unit becomes too low to be used for supply. Therefore, the water from the condensing unit must be further heated.

The energy in the gas after the condensing unit can be further utilized, for instance by transferring water vapour and heat to the combustion air that is added to the thermal process, or by means of a heat pump.

In some, especially chemical plants, chilling of hot gases by massive water injection into a "quench" is used. A "quench" is thus wet, as there is a surplus of water. In these plants, no considerable evaporations will take place of the injected water, as the water amount is very large in order to secure cooling of the gases. Similarly, no significant change of the gas characteristics (e.g. the dew point) will take place. The nozzles used in a quench are of the type generating large water drops and delivering a large amount of water. Thus, in a quench the heat capacity (approx. 4.16 J/g/°C) of water is used to cool the gas.

In some, especially chemical plants, chilling of hot gases by water injection into an "evaporative cooler" is used. In an "evaporative cooler" the cooled gas can be dry and thus dry gas cleaning systems can be used for cleaning the gases, which is necessary due to environmental legislations. One example of such plants is cement production plants. The water vapour in the gas from "evaporative coolers" is not condensated and used for production of hot water.

In some plants, fuelled with gas or oil, the combustion chamber is very compact and followed by an injector which is used as a gas pump. The ejector can then be followed by a heat exchanger where water vapours condensate and energy hereby is be retrieved. However such systems can not be used for several reasons, for example:
A. Feeding systems and combustion chambers for solid fuels are very different from feeding systems and combustion chambers for gaseous fuels.

The following the condensing heat will corrode and/or block up with particles if solid fuels are used.

The invention provides a method and a plant allowing transfer of energy from hot gases to water or another fluid by means of considerably fewer heat transfer units, as the heat transfer from hot gases can be gathered in a single condensing unit. Moreover, a more simple water circuit is obtained as coupling and control of water circuit for a condensing unit as well as a convection part are avoided.

Thus, the invention provides a method for heat recovery from hot flue gas, produced in a thermal reactor as defined in claim 1. According to the method, water is injected at one or more injection zones in such an amount and in such a way that the flue gas temperature is reduced to below 400°C and the gas dew point is at least 60°C due to water evaporation. Subsequently, the gas is led through a condensing heat exchanger unit (8), where at least some of the water vapour is condensed, and the condensation heat is used for heating a liquid stream, mainly water.

In this way, the comprehensive evaporation heat of water (approx. 2.2 MJ/kg) is utilized twice:
1. By injection of water and its evaporation, the amount of water vapour in the gas is increased, and thus the dew point of the gas is increased.
   As an example could be mentioned that injection of water into a flue gas from combustion of biomass in such an amount that the gas is cooled to i50°C will increase the dew point for the flue gas to approx. 85°C. The dew point in flue gas is usually 35-60°C without water injection.
2. The cooled gas containing a large amount of water vapour can then produce the amount of energy in the condensing heat exchanger unit which was previously produced in at least two units, i.e. a dry and hot convection part and a condensing part. Besides, the dew point of the flue gas has increased considerably due to the water injection, which means that the condensing heat exchanger unit can heat water or another liquid to a temperature suitable for using the water directly as supply.

At least a part of the water injected into the hot gases will atomize in a nozzle, by which the water will evaporate more quickly.

Water injection into the hot gas may take place in several injection zones, which may comprise the fuel, the thermal reactor, a gas cleaning unit and/or the condensing heat exchanger unit. By water injection into fuel and/or the thermal reactor, a number of advantages are obtained:
- If the plant is designed for wet fuels, the same plant can be used for dry fuels by water injection into the fuel and/or the thermal reactor. Thus, a fuel flexible plant is obtained.
- NOx-formation can be controlled and reduced, as NOx formation is independent of temperature.

The thermal reactor and the gas pipes to the condensing heat exchanger unit may be separated or be built together in one unit, as the thermal conversion then takes place in one zone, whereas water injection may take place in that reactor zone and possible also somewhere else in a subsequent zone.

Before and/or after the condensing unit, the gas can be cleaned of undesirable materials such as e.g. ammonia, heavy metals, acids, chlorine, sulphur, particles, salts, etc. This may for instance be done in a bag filter, a cyclone, and electrofilter or in a scrubber, possibly combined with addition of absorbents such as active carbon, lime, bicarbonate etc. As long as the gas temperature is above the water dew point, dry gas cleaning technologies can be used, e.g. bag filter or electrofilter. If the gas is wet, scrubbers and/or wet electrofilters can be used.

A part of the water injected into the gas can advantageously be injected at great speed in the direction of the gas flow. By this, kinetic energy from the water can be transferred to the gas, and the water injection may then act as a gas pump (ejector).

If an especially high supply temperature is desired, the water heated in the condensing heat exchanger unit can be further heated, e.g. via a water-cooled feeder, a water-cooled grate water-cooled areas in the reactor and/or other cooled surfaces around the thermal conversion area or via another thermal production.

After the condensing heat exchanger unit, a certain energy amount will be left in the gas in the form of heat and water vapour. Some of that energy can be utilized by transfer to the combustion air via an enthalpy exchanger. In an enthalpy exchanger, water vapour and heat are transferred to the combustion air, implying an even higher water vapour amount in the gas and thus a higher efficiency of the condensing unit. Enthalpy exchangers can be designed in different ways, e.g. as rotating units, where combustion air flows on one side and hot gas on the other, or as a system where the gas after the condensing heat exchanger unit changes with cold water, whereby the water is heated. The heated water can then be used for heating and humidifying the combustion air.

By combustion of solid fuels, e.g. straw or waste sedimentation of particles will often occur on the convection part, as the hot particles are sticky due to a low ash melting point. By water injection and corresponding reduction of the gas temperature, this problem is eliminated.

The hot water can be produced close to the consumption place or be sent to the consumer via a district heating network. Plants designed according to the invention can be built in a very wide spectrum of sizes, approx. 1 kW-250 MW input effect.

The thermal unit may have other purposes than only heat production, e.g. production of gas and electricity among others. Among technologies relevant for the invention can be mentioned: Combustion plants for solid fuel (biomass, waste and coal) for mere heat production as well as CHP production, gas and oil fired boilers, motors, gas turbines, gasification plants etc.

If the thermal unit is of the fluid bed type, water injection into the bed can be used for adjusting the temperature in the bed, by which operational (e.g. slag formation) and environmental (e.g. reduction of NOx) advantages can be obtained. Water injection into the bed will further contribute to fluidization of the bed. This kind of temperature adjustment is considerably more robust than the traditional technique in the form of cooling coils which are quickly worn down of the bed material.

The condensed water can be cleaned of particles, salts, heavy metals etc. and be adjusted for pH, before it is used or led away.

The water injected into the fuel in the thermal unit, in the gases or in the condenser may be condensate, segregated in the condensing unit, or water added from outside.

In the thermal unit, the condensing unit and in the connecting gas duct there may be atmospheric pressure, or pressures above or below the atmosphere.

The invention further provides a system for decomposition of fuel and production of hot water as defined in claim 13, and comprising a thermal reactor, a flue gas duct, one or more water injection devices e.g. in the form of nozzles and a condensing heat exchanger unit connected to the flue gas duct. Here at least some of the water vapour of the gas is condensed, and the condensation heat is used for heating of a flow of fluid, preferably water, and means for control of the water injection into the flue gas in order that the flue gas temperature is reduced to below 400°C, and the gas dew point becomes at least 60°C, due to the evaporation of water.

The invention is explained in more detail in the following, referring to the drawing where
Fig. 1 schematically shows the first design of the plant according to the invention,
Fig. 2 schematically shows the second design of the plant according to the invention, where solid fuel is burned in a grate-fired boiler, and where particles are removed from the flue gas in a bag filter before condensing,
Fig. 3 schematically shows the third design of the plant according to the invention, where solid fuel is burned in a grate-fired boiler, and where water is added by means of an ejector,
Fig. 4 schematically shows the fifth design of the plant, where fuel is gasified and the heat energy in the gas is utilized,
Fig. 5 shows a diagram of the flue gas output from cooling, with and without preceding water injection and evaporation, and
Fig. 6 shows two tables with energy calculations, where wet and dry fuel, respectively, are converted. The calculations show results for today's standard technology and for the invention with and without moistening of combustion air.

In the following, corresponding parts in the different designs will have the same reference terms.

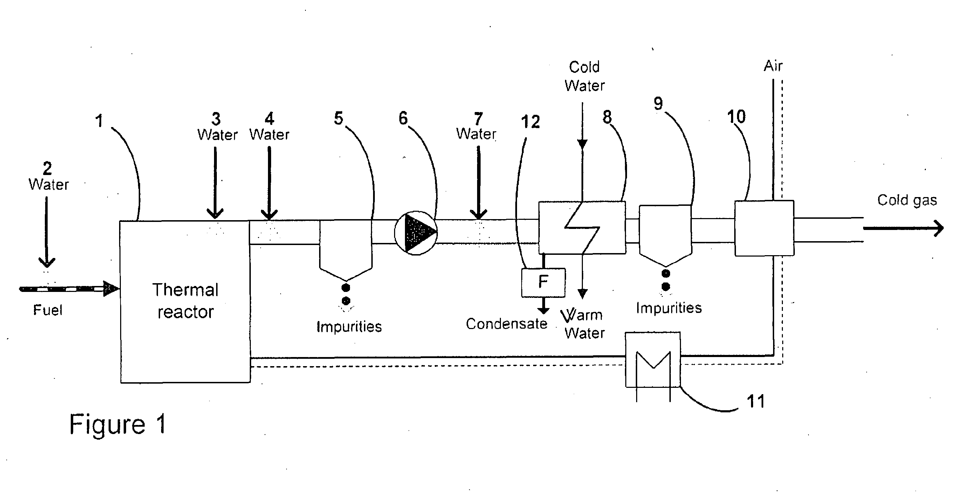

In Fig. 1, 1 is a unit or reactor, to which fuel is added. The fuel is converted thermally by addition of air (and/or oxygen). Thus, a warm gas is produced in the thermal unit 1. The fuel added to unit 1 is solid e.g. biomass, waste or coal. If the thermal unit 1 is designed for fuels with low calorific power, e.g. wet fuel, and if the added fuel has a higher calorific power, the temperature in the unit or in the generator 1 can be adjusted by adding water to the fuel at 2 and/or by adding water at 3 within the thermal unit 1.

At 4, water is injected into the hot gases leaving the thermal unit 1. The water evaporates and cools the gases considerably, as the evaporation energy from water is very high. The unit in which injection 4 is placed can be built of heat-proof steel, bricks, castings and/or other materials. The amount of water dosed at 4 can be controlled on basis of the gas temperature and/or the dew point by means of adequate control means S, placed in a position after 4, where the injected water has evaporated.

If the cooled gas contains impurities, e.g. particles, a gas cleaning unit 5 can remove these impurities from the dry gas. Via a gas blower or pump 6, the gas can be pumped on to a condensing heat exchanger unit 8, where the heat in the gases, including the condensation heat in the water vapour, can be transferred to the water to be heated. In the condensing unit, water can also be injected at 7.

The gas sucker 6 can also be placed after the condensing unit 8, where the gas flow is lower due to the cooling of the gas and the condensing of the water vapours.

In and/or after the condensing unit 8, more impurities can be removed from the gas at 9 and/or from the produced condensate at 12. After the condensing unit 8, some of the energy left in the gas in the form of heat and moist can be transferred, at 10, to the combustion air which is added to the thermal unit 1. The humidified air can be further heated in a heat exchanger 11, before the air is added to the thermal unit 1, whereby the supply lines are kept dry.

This type of plant can be produced in many different sizes, from a few kW (villa boilers) to large plants above 100 MW.

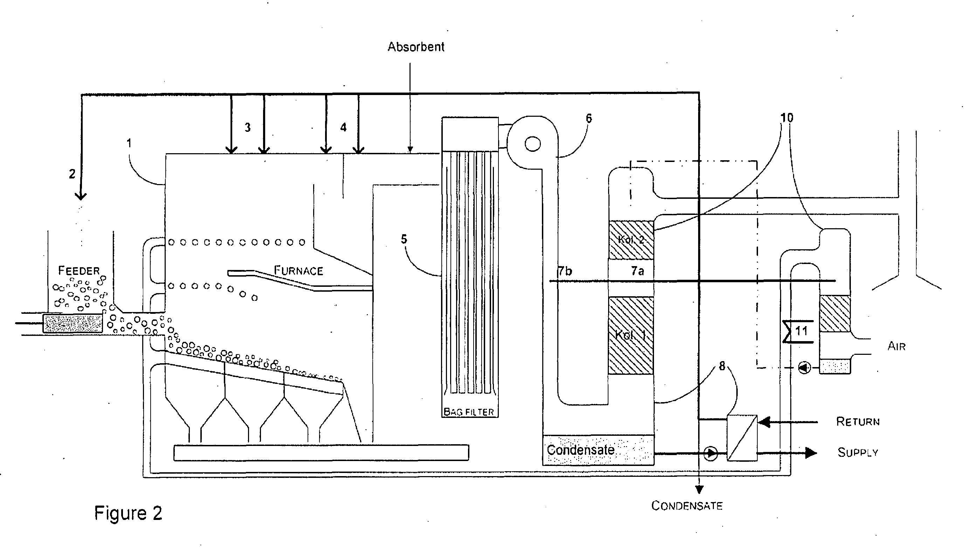

Fig. 2 shows a combustion plant for production of district heating, and where the gas is cleaned before condensing and combustion air is moisturized. 1 is a burner for combustion of solid fuel. The plant is brick-lined so that it can burn fuels with a high water content (up to 60% water) or which otherwise have a low calorific value (below 10 MJ/kg). Fuels with a higher calorific value can also burn in such a plant, as water can be added to the fuel at 2, or in the boiler room at 3. Further, at 4 water is added to the hot gases leaving the burner 1. The water evaporates and cools the gases to ca. 150-200°C. Subsequently, the gas is cleaned of particles in a bag filter 5. If other substances are to be removed from the gas, absorbents can be added before the filter, e.g. lime, active carbon, bicarbonate etc.

The flue gas is sucked through the gas sucker or the pump 6 and is cooled in the condensing unit 8, comprising two cooling towers placed above each other, designated respectively "Kol.1" and "Kol. 2", and a heat exchanger 13, as the flue gas flows counterflow with the cooled condensate 7a. As the condensing unit 8 is built of glass fibre, it is important that the gas is cooled to below ca. 150°C, before the inlet. Addition of water in the nozzle in 7b protects the condenser inlet 14 from becoming too warm. In the cooling tower "Kol. 1" cooling water is added at 7a. Hereby, steam in the flue gas flow is condensed, and the condensate is gathered in a room 15 under the cooling towers and the inlet 14. The hot condensate is heat exchanged in the heat exchanger 13 by water in a district heating system which is not shown, as the cold district heating water is added via a return pipe, whereas the hot water is led back to the system via a supply pipe. As the flue gas dew point is high, e.g. ca. 85°C, the temperature of the produced condensate can be about 85-90°C. Thus, the district heating water can be heated from the condensate at one single stage.

The combustion air added to the burner 1 can be heated in a humidifier 17, where hot water is added at 18, or by means of a heater device 11, ensuring that the air ducts are kept dry. The water added at 2-4, 7a, 7b and 18, may - as shown - be the cooled condensate that leaves the heat exchanger 13, and any surplus condensate can be led away at 19. Condensate gathered at the bottom of the humidifier 17 can be used for addition to the cooling tower "Kol. 2".

When the flue gas has been cooled by the condensate in the tower "Kol. 1", it is led through another section, "Kol. 2", where the gas is cooled by water having been cooled by the combustion air. The cooling of the flue gas and humidifying of the combustion air together form an enthalpy exchanger 10, which increases the energy efficiency.

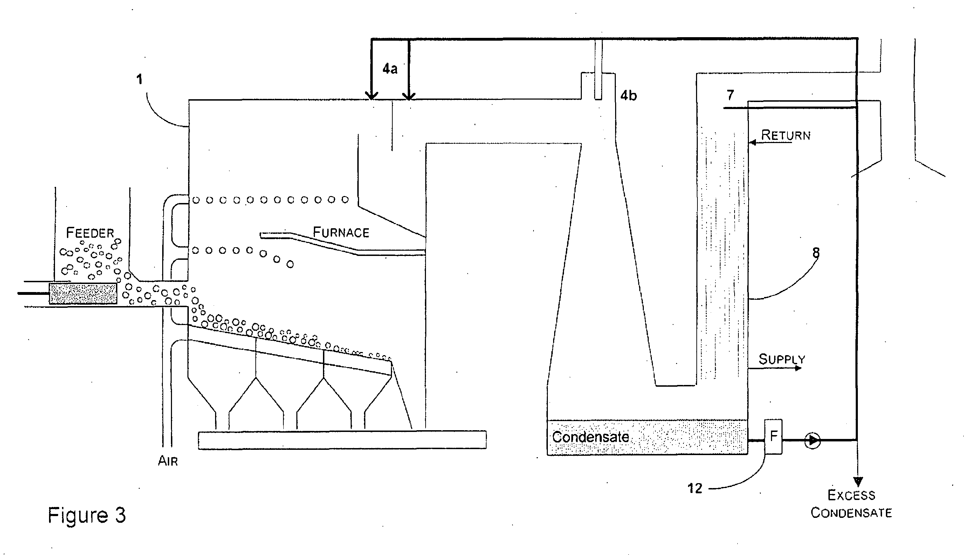

Fig. 3 shows a combustion plant for production of district heating. The gas is led through the plant by means of an ejector pump. 1 is a burner for combustion of solid fuel. At 4, water is added to the hot gases leaving the burner 1. The water evaporates and cools the gases. At 7a water is injected at great speed in the direction of the gas flow through a pipe 20, the cross section of which is increased in the flow direction. Thus, the water injection at 7a through the pipe 20 acts as an ejector.

In a condensing heat exchanger 8, heat energy is transferred from the flue gas to the district heating water. The heat exchanger in 8 may be made of glass, plastic or acid-proof stainless steel, but needs not be heat-proof. The exchanger can be cleaned of particles by means of water injected at 7b, but this needs not be a continuous cleaning. The produced condensate can be cleaned of particles etc. at 12, before it is used as injection water at 4a, 4b and 7 or drained off to a drain at 19.

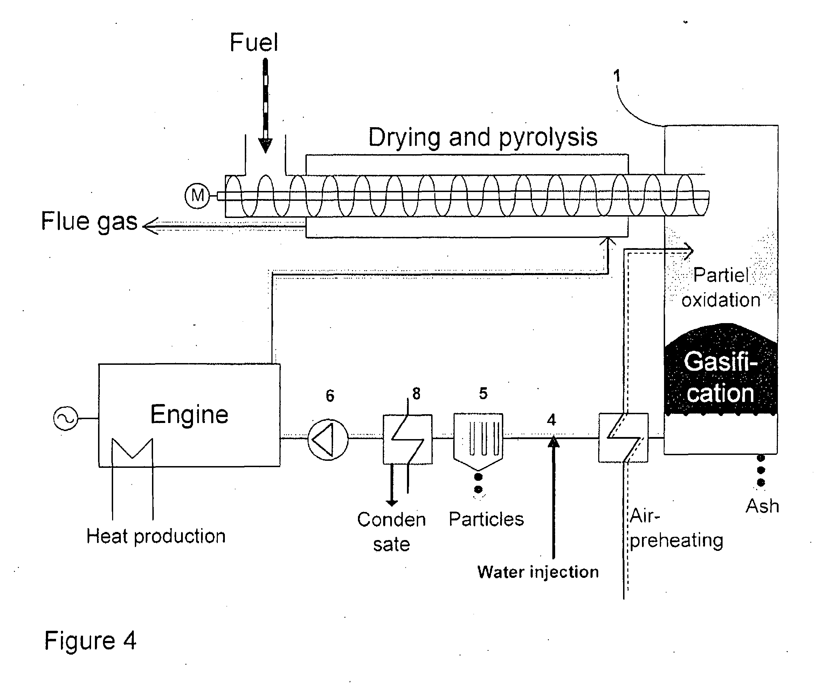

Fig. 4 shows a preferred design of a gasifier plant 1, where the produced gas firstly is cooled by being used for preheating of combustion air in a heat exchanger 21, and then is cooled by water injection at 4. The drafted gasifier is of the type "staged fixed bed", but can in principle be other gasifier types, e.g. a fluid bed gasifier.

After water injection at 4, the gas is cleaned of particles (and possibly tars) e.g. in a bag filter and/or an active carbon filter 5, after which the gas in a heat exchanger 8 is cooled during condensing of water. By means of a gas blower or pump 6 the gas is blown to a conversion unit, here illustrated by an engine, but there could also be other conversion units, e.g. a gas turbine, liquefaction equipment for conversion of the gas to fluid fuel etc.

The flue gas energy from the conversion unit can be utilized e.g. for heat production. Thus, the invention can be utilized twice.

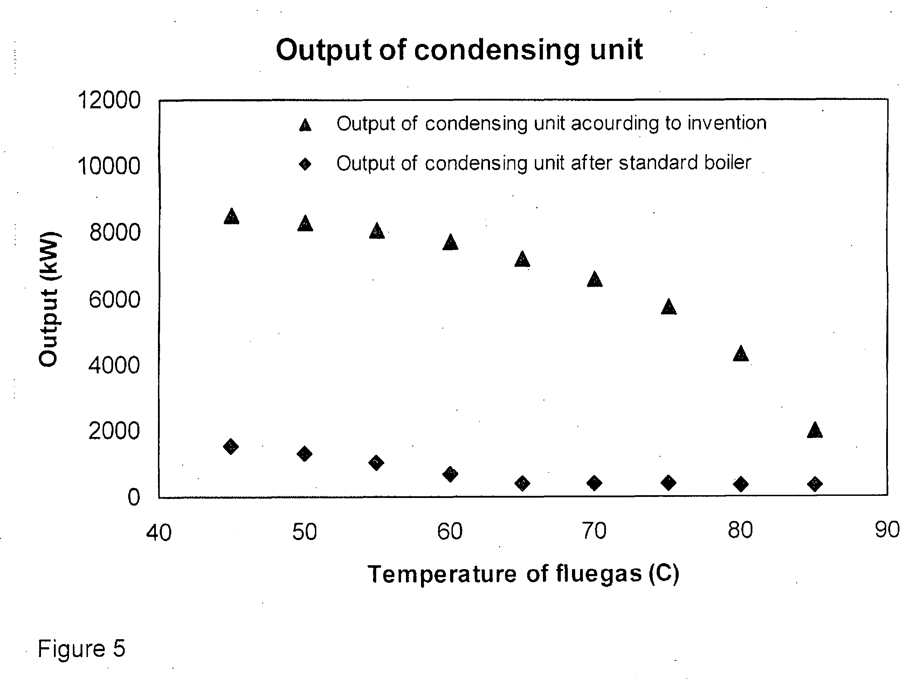

In Fig. 5 is a diagram showing the calculation of the output from cooling of flue gas from respectively a traditional boiler and by water injection according to the invention, cf. Figures 2 and 3. Common data for the two calculations are:
- amount of fuel (waste/wood chip) of 3000 kg/hour
- humidity content in the fuel is 45%
- O₂ in the flue gas is 5% (dry)
- the temperature of the flue gas out of boiler/after water injection = 150°C.

It appears from Figure 5 that about 1700 kW can be produced in the condensing unit by cooling of the flue gas to ca. 45°C with standard technology, whereas 8500 kW can be produced by using the invention. The temperatures of the produced water are very different too. With standard technology water can be produced at about 65°C. However, by using the invention, water can be produced at 85-90°C. In most cases, a supply temperature of 85°C will be satisfactory, but if this is not enough, a radiation section/grate cooling can be incorporated for boosting the temperature. If e.g. 95°C supply temperature is desired, ca. 10-20% of the energy must be produced in the radiation section/grate cooling.

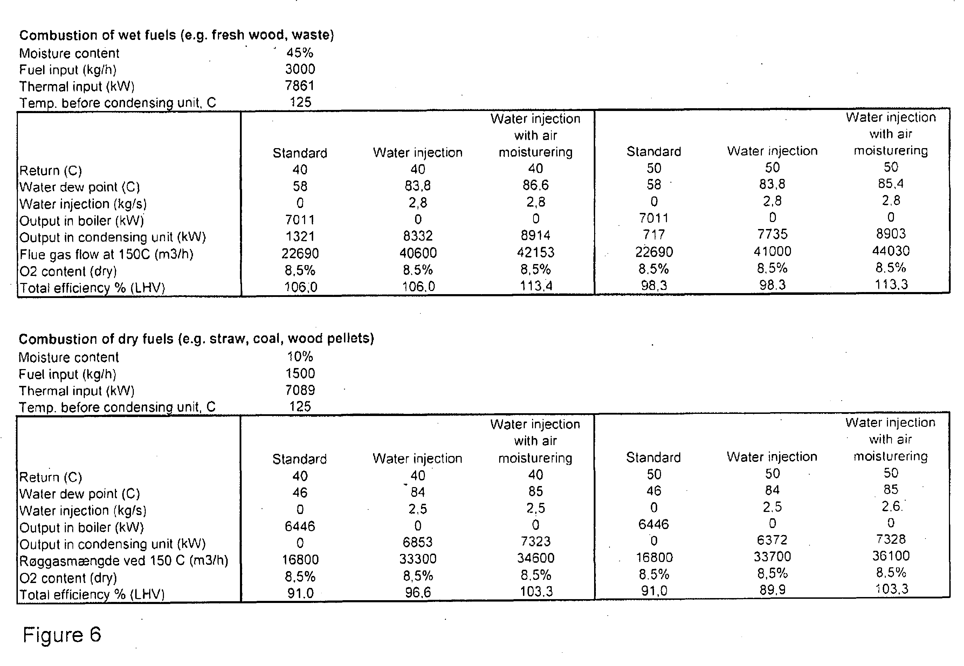

Figure 6 shows two tables with key figures for selected calculations for district heating plants. It appears from the key figures that the efficiency by use of wet fuels will be the same for a standard design with condensing operation and with "water injection".

The calculations concerning the invention are "conservative", i.e. the fact that the invention allows for better control of the plant and thus for less surplus of air, giving a higher efficiency degree, has not been taken into account in the calculation.

As condensing operation on dry fuels is not standard, the new method gives a higher efficiency degree by use of dry fuels. It should be noted that in case of high return temperature (above 45 °C) and dry fuel, the process will be water consuming, unless moistening of combustion air is used.

Further, moistening will be able to increase the efficiency degree considerably, especially at higher return temperatures. Due to water injection, the amount of flue gas is increased during cooling of the flue gas. The condensing unit and belonging pipes must of course be dimensioned for this.

Summarization of the most important advantages of the invention:
- **Simpler and cheaper plant.**
   The most important advantage of the concept is that the construction becomes considerably simpler and cheaper than for traditional condensing plants with both a convection part and a condensing unit. By use of the invention, a convection boiler and belonging boiler circuit with shunt and heat exchanger can be saved, and the water circuit and the control of the heat productions become much simpler and thus cheaper. However, there will be an extra cost of water dosing and a larger condensing plant, but that will be very small compared to the savings.
- **Compact plant**
   The principles used for transferring heat from gas to water in the concept (evaporation of water in a hot gas and scrubber + plate exchanger/condensing pipe cooler) are very effective (compared to dry convection) and thus compact.
   As the number of units is reduced, and as the principles for heat transfer are more effective, the total plant becomes more compact.
- **Lower maintenance costs**
   Maintenance costs of a water injection system become considerably lower than the present maintenance costs of "boiler operation".
- By use of fluid bed and by use of water injection to adjust the bed temperature, savings are also obtained for maintenance, as the traditional cooling pipes, which will be worn out of the bed material, are avoided.
- **Fuel flexibility**
   Up to now, it has been necessary to construct plants for either wet or dry fuel. Wet fuel necessitates brick lining in the combustions chamber to obtain a good combustion. If dry fuel is used in brick-lined plants, the combustion temperature will be too high. With the water injection concept, the combustion chamber can be used for wet fuel, and in case of combustion of dry fuel, an adequate amount of water will be added in order to keep the temperature down.
- **Higher efficiency by better control of air** The efficiency is increased by lower air consumption, as the flue gas loss becomes smaller. With careful positioning and control of the water nozzles, the air consumption can be reduced compared to plants with "boiler operation", which will give a better efficiency.
- **Higher efficiency by moistening of combustion air**
   The efficiency is further increased by 5-15% by moistening of combustion air.
- **Lower emissions**
   Thermal NOx can be reduced by water injection in and around the combustion chamber, especially in case of gas and coal combustion.
   Emissions of HCI, SO2, Dioxins etc, will be reduced when the water in the condensing unit is neutralised e.g. with NaOH.
   Particle emissions will be reduced when filters are used e.g. bag filters.

It should be understood that numerous changes and modifications of the embodiments of the invention described above could be made within the scope of the appended claims. Furthermore, the use of solid fuel in the method and system defined by the claims could be replaced by or supplemented by the use of gasous and/or liquid fuel.

## Claims

1. A method for recovering heat from hot flue gas produced in a thermal reactor (1) fuelled with solid fuel, said method comprising
injecting water into the gas at one or more injection zones (2, 3, 4, 7),
subsequently passing the gas through a condensing heat exchanger (8), where at least some of the water vapour in the gas is condensed and condensing heat is released, and
utilizing the condensing heat for heating a stream of fluid, such as water, in the heat exchanger,
**characterized in that** the water is injected in such an amount and such a way that due to evaporation of injected water the flue gas temperature is reduced to below 400 °C, and the gas dew point becomes at least 60 °C.

2. A method according to claim 1, wherein the gas dew point becomes at least 70 °C, preferably 80 °C or 85 °C.

3. A method according to any one of the preceding claims, wherein the flue gas temperature is reduced to below 300 °C, preferably to 150-200 °C.

4. A method according to any one of the preceding claims, wherein the injection zones (2, 3, 4, 7) are located in one or more of the thermal reactor (1), zones downstream of the thermal reactor in a gas flow direction, the fuel in the thermal reactor (1) and the heat exchanger (8).

5. A method according to any one of the preceding claims, wherein impurities are removed from the gas by means of a bag filter (5), a cyclone, an electro filter, a scrubber or the like.

6. A method according to any one of the preceding claims, wherein impurities are removed from the condensed water.

7. A method according to any one of the preceding claims, wherein pH of the condensed water is adjusted.

8. A method according to any one of the preceding claims, wherein at least some of the water injected in to the flue gas is vaporized using a nozzle.

9. A method according to any one of the preceding claims, wherein part of the injected water is injected at a speed above 20 m/s in a gas flow direction.

10. A method according to any one of the preceding claims, wherein the fluid heated in the heat exchanger (8) is further heated, e.g. by means of a fluid cooled feeder, a fluid cooled grate, fluid cooled surfaces in the reactor or other cooled surfaces around the thermal reactor.

11. A method according to any one of the preceding claims, wherein water vapour and heat are transferred to combustion air, which is led to the thermal reactor (1).

12. A method according to any one of the preceding claims, wherein the thermal reactor (1) is of the fluid bed type and injection of water into the bed is used to regulate temperature and flow conditions in the bed.

13. A method according to any one of the preceding claims, wherein condensed water from the heat exchanger is injected in the one or more injection zones.

14. A system for decomposition of solid fuel and for production of hot fluid, said system comprising
a thermal reactor (1) for decomposing the fuel and producing hot flue gas from the fuel,
an evaporative cooler with water injection devices, e.g. in the form of nozzles, for injection of water into the flue gas so that the injected water evaporates,
means for controlling the water injection into the gas, and subsequently
a condensing heat exchanger (8) for condensing at least some of the water vapour in the gas and utilizing condensing heat for heating a stream of fluid, such as water,
**characterized in that** the means for controlling the water injection is adapted to inject the water so that, as a result of evaporation of injected water, the gas temperature is reduced to below 400 °C and the gas dew point becomes at least 60 °C.

15. A system according to claim 14 further comprising one or more nozzles for injecting water into one or more of the fuel in the thermal reactor (1), the thermal reactor and the flue gas in connection with the heat exchanger (8).

16. A system according to any one of claims 14-15, further comprising a gas cleaning unit (5) in the form of a bag filter, electro filter, scrubber or the like.

17. A system according to any one of claims 14-16 having means for leading at least some of the fluid from the heat exchanger to another unit (11) for further heating.

18. A system according to any one of claims 14-17, further comprising an enthalpy exchanger (10), where water vapour and heat are transferred to combustion air to be added to the reactor (1).

19. A system according to any one of claims 14-18 comprising a fluid bed reactor with means for injection of water into the bed in order to adjust temperature, emissions (NOx) and flow conditions.

## Patentansprüche

1. Verfahren zum Gewinnen von Wärme aus heißem Abgas, das in einem Thermoreaktor (1), der mit festem Brennstoff angetrieben wird, erzeugt wird, wobei das Verfahren folgendes umfasst
Einspritzen von Wasser ins Gas in einem oder mehreren Einspritzzonen (2, 3, 4, 7),
danach Leiten des Gases durch einen kondensierenden Wärmetauscher (8), wo mindestens ein Teil des Wasserdampfs im Gas kondensiert wird, und Kondensationswärme freigegeben wird, und
Anwenden der Kondensationswärme zum Heizen eines Flüssigkeitsstroms, wie z.B. Wasser, im Wärmetauscher,
**dadurch gekennzeichnet, dass** das Wasser in einer Menge und so eingespritzt wird, dass die Abgastemperatur aufgrund der Verdampfung des eingespritzten Wassers auf weniger als 400°C reduziert wird, und der Gastaupunkt wenigstens 60°C wird.

2. Verfahren nach Anspruch 1, wo der Gastaupunkt mindestens 70°C, vorzugsweise 80°C oder 85°C wird.

3. Verfahren nach irgendeinem der vorhergehenden Ansprüche, wo die Abgastemperatur auf weniger als 300°C, vorzugsweise auf 150-200°C, reduziert wird.

4. Verfahren nach irgendeinem der vorhergehenden Ansprüche, wo sich die Einspritzzonen (2, 3, 4, 7) in einer oder mehreren der Thermoreaktor (1)-Zonen flussabwärts vom Thermoreaktor in einer Gasstromrichtung, vom Brennstoff im Thermoreaktor (1) und vom Wärmetauscher (8) befinden.

5. Verfahren nach irgendeinem der vorhergehenden Ansprüche, wo Verunreinigungen mit Hilfe eines Beutelfilters (5), eines Staubabschneiders, eines Elektrofilters, eines Gaswäschers oder desgleichen aus dem Gas entfernt werden.

6. Verfahren nach irgendeinem der vorhergehenden Ansprüche, wo Verunreinigungen aus dem Kondenswasser entfernt werden.

7. Verfahren nach irgendeinem der vorhergehenden Ansprüche, wo der pH-Wert des Kondenswassers reguliert wird.

8. Verfahren nach irgendeinem der vorhergehenden Ansprüche, wo mindestens ein Teil des ins Abgas injizierten Wassers mit Hilfe einer Düse verdampft wird.

9. Verfahren nach irgendeinem der vorhergehenden Ansprüche, wo ein Teil des injizierten Wassers bei einer Geschwindigkeit von mehr als 20 m/s in eine Gasstromrichtung injiziert wird.

10. Verfahren nach irgendeinem der vorhergehenden Ansprüche, wo das im Wärmetauscher (8) erhitzte Fluid zusätzlich erhitzt wird, z.B. mit Hilfe eines fluidgekühlten Speisers, eines fluidgekühlten Rostes, fluidgekühlter Reaktoroberflächen oder anderer gekühlter Oberflächen um den Thermoreaktor herum.

11. Verfahren nach irgendeinem der vorhergehenden Ansprüche, wo Wasserdampf und Wärme zur Verbrennungsluft übertragen werden, die dem Thermoreaktor (1) zugeführt wird.

12. Verfahren nach irgendeinem der vorhergehenden Ansprüche, wo der Thermoreaktor (1) des Fließbett-Typs ist, und das Einspritzen von Wasser ins Bett hinein dazu dient, die Temperatur und die Flow-Bedingungen im Bett zu regeln.

13. Verfahren nach irgendeinem der vorhergehenden Ansprüche, wo Kondenswasser von dem Wärmetauscher in die eine oder mehreren Einspritzzonen injiziert wird.

14. System zur Zersetzung festen Brennstoffs und zur Herstellung von heißem Fluid, wo das System folgendes umfasst:
einen Thermoreaktor (1) zur Zersetzung des Brennstoffs und zur Herstellung von heißem Abgas aus dem Brennstoff heraus,
einen Verdampfungskühler mit Wassereinspritzeinrichtungen, z.B. in Form von Düsen, zum Einspritzen von Wasser ins Abgas hinein zum Verdampfen des eingespritzten Wassers,
Mittel zur Regelung des Einspritzens von Wasser ins Gas hinein und anschließend
einen kondensierenden Wärmetauscher (8) zum Kondensieren mindestens eines Teils des Wasserdampfes im Gas und zum Einsatz von Kondensationswärme zum Erwärmen eines Fluidstromes, wie z.B. Wasser,
**dadurch gekennzeichnet, dass** das Mittel zum Regeln des Einspritzens von Wasser dazu eingerichtet ist, das Wasser so einzuspritzen, dass durch die Verdampfung des eingespritzten Wassers die Gastemperatur auf weniger als 400°C reduziert wird, und der Gastaupunkt wenigstens 60°C wird.

15. System nach Anspruch 14, weiterhin umfassend eine oder mehrere Düsen zum Einspritzen von Wasser in einen oder mehrere der folgenden: der Brennstoff im Thermoreaktor (1), der Thermoreaktor und der Abgas in Verbindung mit dem Wärmetauscher (8).

16. System nach irgendeinem der Ansprüche 14-15, weiterhin umfassend eine Gasreinigungseinheit (5) in Form eines Beutelfilters, eines Elektrofilters, eines Gaswäschers oder desgleichen.

17. System nach irgendeinem der Ansprüche 14-16, welches System mit Mitteln zum Leiten mindestens eines Teils des Fluids aus dem Wärmetauscher an eine andere Einheit (11) zum Weitererwärmen ausgerüstet ist.

18. System nach irgendeinem der Ansprüche 14-17, weiterhin umfassend einen Enthalpietauscher (10), wo Wasserdampf und Wärme zur Verbrennungsluft übertragen werden, die dem Reaktor (1) zuzuführen ist.

19. System nach irgendeinem der Ansprüche 14-18, umfassend einen Fließbettreaktor mit Mitteln zum Einspritzen von Wasser ins Bett hinein zur Regelung der Temperatur, der Emissionen (NOx) und der Flow-Bedingungen.

## Revendications

1. Procédé de récupération de chaleur à partir d'un effluent gazeux chaud produit dans un réacteur thermique (1) alimenté par du combustible solide, ledit procédé comprenant
injection d'eau dans le gaz au niveau d'une ou de plusieurs zones d'injection (2, 3, 4, 7),
puis passage du gaz au travers d'un échangeur de chaleur à condensation (8), dans lequel au moins une partie de la vapeur d'eau présente dans le gaz est condensée et de la chaleur de condensation est dégagée, et
utilisation de la chaleur de condensation pour chauffer un flux de fluide, tel que de l'eau, dans l'échangeur de chaleur,
**caractérisé en ce que** l'eau est injectée en une quantité telle et de manière telle que, du fait de l'évaporation de l'eau injectée, la température de l'effluent gazeux est réduite à moins de 400°C et le point de rosée du gaz devient au moins égal à 60°C.

2. Procédé selon la revendication 1, dans lequel le point de rosée du gaz devient au moins égal à 70°C, de préférence 80°C ou 85°C.

3. Procédé selon l'une quelconque des revendications précédentes, dans lequel la température de l'effluent gazeux est réduite à moins de 300°C, de préférence à 150-200°C.

4. Procédé selon l'une quelconque des revendications précédentes, dans lequel les zones d'injection (2, 3, 4, 7) se situent dans l'une ou plusieurs des zones suivantes : réacteur thermique (1), zones en aval du réacteur thermique dans le sens d'écoulement du gaz, combustible dans le réacteur thermique (1) et échangeur de chaleur (8).

5. Procédé selon l'une quelconque des revendications précédentes, dans lequel les impuretés sont éliminées du gaz au moyen d'un filtre à poches (5), d'un cyclone, d'un électrofiltre, d'un laveur ou similaire.

6. Procédé selon l'une quelconque des revendications précédentes, dans lequel les impuretés sont éliminées de l'eau condensée.

7. Procédé selon l'une quelconque des revendications précédentes, dans lequel le pH de l'eau condensée est ajusté.

8. Procédé selon l'une quelconque des revendications précédentes, dans lequel au moins une partie de l'eau injectée dans l'effluent gazeux est vaporisée à l'aide d'une buse.

9. Procédé selon l'une quelconque des revendications précédentes, dans lequel une partie de l'eau injectée est injectée à une vitesse supérieure à 20 m/s dans le sens d'écoulement du gaz.

10. Procédé selon l'une quelconque des revendications précédentes, dans lequel le fluide chauffé dans l'échangeur de chaleur (8) est soumis à un chauffage supplémentaire, par exemple au moyen d'un dispositif d'alimentation refroidi par fluide, d'une grille refroidie par fluide, de surfaces refroidies par fluide à l'intérieur du réacteur ou d'autres surfaces refroidies autour du réacteur thermique.

11. Procédé selon l'une quelconque des revendications précédentes, dans lequel la vapeur d'eau et la chaleur sont transférées vers l'air de combustion, qui est amené au réacteur thermique (1).

12. Procédé selon l'une quelconque des revendications précédentes, dans lequel le réacteur thermique (1) est de type lit fluidisé et l'injection d'eau dans le lit est utilisée pour réguler la température et les conditions d'écoulement dans le lit.

13. Procédé selon l'une quelconque des revendications précédentes, dans lequel l'eau condensée provenant de l'échangeur de chaleur est injectée dans la ou les zones d'injection.

14. Système de décomposition de combustible solide et de production de fluide chaud, ledit système comprenant
un réacteur thermique (1) pour décomposer le combustible et produire un effluent gazeux chaud à partir du combustible,
un refroidisseur à évaporation doté de dispositifs d'injection d'eau, par exemple des buses, pour injecter de l'eau dans l'effluent gazeux de manière à ce que l'eau injectée s'évapore,
un moyen permettant de contrôler l'injection d'eau dans le gaz, et puis
un échangeur de chaleur à condensation (8) pour condenser au moins une partie de la vapeur d'eau présente dans le gaz et utiliser la chaleur de condensation pour chauffer un flux de fluide, tel que de l'eau,
**caractérisé en ce que** le moyen permettant de contrôler l'injection d'eau est approprié pour injecter l'eau de manière à ce que, en raison de l'évaporation de l'eau injectée, la température du gaz soit réduite à moins de 400°C et le point de rosée du gaz devienne au moins égal à 60°C.

15. Système selon la revendication 14 comprenant également une ou plusieurs buses pour injecter de l'eau dans l'une ou plusieurs des zones suivantes : combustible dans le réacteur thermique (1), réacteur thermique et effluent gazeux en rapport avec l'échangeur de chaleur (8).

16. Système selon l'une quelconque des revendications 14 à 15, comprenant également une unité d'épuration de gaz (5) sous forme de filtre à poches, d'électrofiltre, de laveur ou similaire.

17. Système selon l'une quelconque des revendications 14 à 16 doté d'un moyen permettant d'amener au moins une partie du fluide provenant de l'échangeur de chaleur vers une autre unité (11) pour un chauffage supplémentaire.

18. Système selon l'une quelconque des revendications 14 à 17, comprenant également un échangeur enthalpique (10), dans lequel la vapeur d'eau et la chaleur sont transférées vers l'air de combustion devant être ajouté au réacteur (1).

19. Système selon l'une quelconque des revendications 14 à 18, comprenant un réacteur à lit fluidisé doté d'un moyen permettant d'injecter de l'eau dans le lit afin d'ajuster la température, les émissions (NOx) et les conditions d'écoulement.
